(19) Europäisches Patentamt / European Patent Office / Office européen des brevets

(11) **EP 3 219 828 A1**

(12) **EUROPEAN PATENT APPLICATION**
published in accordance with Art. 153(4) EPC

(43) Date of publication:
**20.09.2017 Bulletin 2017/38**

(51) Int Cl.:
*C23C 28/00* (2006.01)    *B32B 9/00* (2006.01)
*B32B 15/20* (2006.01)

(21) Application number: **15858755.0**

(22) Date of filing: **11.11.2015**

(86) International application number:
**PCT/JP2015/081691**

(87) International publication number:
**WO 2016/076344 (19.05.2016 Gazette 2016/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **11.11.2014 JP 2014228982**

(71) Applicant: **Kabushiki Kaisha Kobe Seiko Sho (Kobe Steel, Ltd.)**
**Kobe-shi, Hyogo 651-8585 (JP)**

(72) Inventors:
• **TAKADA, Satoru**
  **Hyogo 651-2271 (JP)**
• **TAKAHASHI, Yusuke**
  **Hyogo 651-2271 (JP)**
• **TATSUMI, Akihiko**
  **Hyogo 651-2271 (JP)**

(74) Representative: **Müller-Boré & Partner**
**Patentanwälte PartG mbB**
**Friedenheimer Brücke 21**
**80639 München (DE)**

(54) **ALUMINUM ALLOY MATERIAL, BONDED BODY, MEMBER FOR AUTOMOBILES, AND METHOD FOR PRODUCING ALUMINUM ALLOY MATERIAL**

(57)    The purpose of the present invention is to provide: an aluminum alloy material which is not susceptible to decrease in the bonding strength even if exposed to a high-temperature humid environment, while having excellent bonding durability; a bonded body; a member for automobiles; and a method for producing an aluminum alloy material. In a method for producing an aluminum alloy material according to the present invention, when a first film that is composed of an oxide film is formed on the surface of an aluminum alloy base (first film formation step), the etching amount is controlled to be less than 700 nm, and after the formation of the first film by a treatment with use of an aqueous solution containing a silicate salt, said treatment being the final stage of the substantial film formation in this step, a second film having a siloxane bond is formed by performing a silane coupling treatment (second film formation step).

Fig. 1

**Description**

TECHNICAL FIELD

The present invention relates to an aluminum alloy material, a joined body, an automotive part, and a method for manufacturing an aluminum alloy material. More specifically, the present invention relates to an aluminum alloy material including an oxide film formed on at least a part thereof, a joined body and an automotive part each using the aluminum alloy material, and a method for manufacturing an aluminum alloy material.

BACKGROUND ART

Various aluminum alloy sheet materials are appropriately selected based on the properties thereof for use as parts of transport such as automobiles, ships and airplanes. Recently, in consideration of a global environmental problem such as $CO_2$ emission suppression, it is required to enhance the fuel efficiency by weight reduction of parts, and use of an aluminum alloy material having a specific gravity of about 1/3 of that of iron and having excellent energy absorptivity is increasing.

For example, an Mg-containing aluminum alloy material such as JIS 5000-series Al-Mg alloy material and JIS 6000-series Al-Mg-Si alloy sheet is used for automotive parts. The method for joining such an aluminum alloy material includes welding and adhesion with an adhesive, and these methods are sometimes used in combination. In the welding, an aluminum alloy material is joined by a point or a line, whereas in the adhesion with an adhesive, an aluminum alloy material is joined by the entire surface thereof and thereby the joining strength is high and it is advantageous in view of collision safety, etc. Accordingly, as regards the automotive part, adhesion with an adhesive tends to be increasing recently. In addition, for the purpose of weight reduction of an automobile, a composite of an aluminum alloy material and a resin is sometimes used.

On the other hand, the aluminum alloy-made automotive part joined with an adhesive has a problem that when water, oxygen, chloride ion, etc. enters the joined part during the use, the interface between the adhesive layer and the aluminum alloy sheet is gradually deteriorated to cause interfacial peeling and the adhesive strength is reduced. Accordingly, a method for preventing such reduction in the adhesive strength and enhancing the adhesion durability of an aluminum alloy-made automotive part having the adhesive layer has been conventionally studied (see, for example, Patent Documents 1 to 3).

For example, Patent Document 1 has proposed a method where by a pickling treatment, an Mg-enriched layer on an aluminum alloy sheet surface is removed and at the same instant, Cu is enriched in the aluminum alloy sheet surface. Patent Document 2 has proposed a method where a specific relationship is established between the amount of Mg enriched in an aluminum alloy sheet surface and the OH absorption rate. Patent Document 3 has proposed a method where a solution treatment and a hot water treatment are successively performed and each of the Mg concentration, Si concentration and OH concentration in an oxide film surface layer of an aluminum material is thereby adjusted to a specific range.

In addition, aluminum and an aluminum alloy material each for automobiles, which have been treated with a silicate-containing aqueous solution to form a silicon-containing film on the surface for the purpose of preventing discoloration or filiform corrosion, have also been proposed (see, Patent Document 4). Furthermore, in an Mg-containing aluminum alloy sheet for an automotive body, as a method for obtaining uniformity of a zinc phosphate film while maintaining excellent formability, a surface treatment method using silicate, which is a specific example of weak etching, has been proposed (see, Patent Document 5).

PRIOR ART LITERATURE

PATENT DOCUMENT

Patent Document 1: JP-A-6-256881
Patent Document 2: JP-A-2006-200007
Patent Document 3: JP-A-2007-217750
Patent Document 4: JP-A-8-144064
Patent Document 5: JP-A-7-188956

## SUMMARY OF THE INVENTION

### PROBLEMS THAT THE INVENTION IS TO SOLVE

However, the techniques described in Patent Documents 1 to 3 have a problem that when exposed to a high-temperature humid environment susceptible to penetration of water, oxygen, chloride ion, etc., deterioration of the interface proceeds to cause interfacial peeling and the adhesive strength is reduced or A1 corrosion is promoted. For example, in the technique described in Patent Document 1, it is stated that bonding to an adhesive is strengthened by Cu enrichment to improve adhesiveness, but the aluminum alloy sheet to which this technique is applied suffers from a concern over promoted decomposition of the resin in a humid environment, and high adhesion durability cannot be expected. Similarly, the effect of enhancing adhesion durability cannot be expected with the techniques described in Patent Documents 4 and 5.

Accordingly, a main object of the present invention is to provide an aluminum alloy material, a joined body and an automotive part, which are resistant to reduction in the adhesive strength and exhibit excellent adhesion durability even when exposed to a high-temperature humid environment, and a method for manufacturing an aluminum alloy material.

### MEANS FOR SOLVING THE PROBLEMS

As a result of intensive experiments and studies so as to attain the object above, the present inventors have found the followings. In the method of performing pickling, since the base metal of the aluminum alloy sheet and the adhesive layer are bonded by hydrogen bonding, when exposed to a high-temperature humid degradation environment, the interface is hydrated, and the bonding force (hydrogen bonding) is reduced.

In the method of performing anodic oxidation, the base metal of the aluminum alloy sheet and the adhesive layer are basically bonded by hydrogen bonding as well, and when exposed to a high-temperature humid environment susceptible to penetration of water, oxygen, chloride ion, etc., the interface is hydrated, and the bonding force is reduced. In addition, since the method of performing anodic oxidation requires a complicated apparatus and a high equipment cost and since the film formation takes a long time, the production efficiency is reduced. In the method of performing a hot water treatment, the base metal of the aluminum alloy sheet and the adhesive layer are also bonded by hydrogen bonding and therefore, when exposed to a high temperature humid environment, interfacial degradation proceeds due to hydration of the interface to cause interfacial peeling, leading to reduction in the adhesive strength.

The present inventors have studied the bonding state of the substrate surface and the adhesive resin layer and found that when after forming a first film composed of an oxide film on a surface of an aluminum alloy substrate (first film forming step), where the etching amount is controlled to less than a specific amount and a first film is formed by a treatment with a silicate-containing aqueous solution as the final stage of substantial film formation of this step, a silane coupling treatment is performed to form a second film (second film forming step), reduction in the adhesive strength upon exposure to a high-temperature humid environment can be suppressed. The present invention has been accomplished based on this finding.

That is, the aluminum alloy material according to the present invention includes an aluminum alloy substrate, a first film formed on at least a part of a surface of the aluminum alloy substrate and including an oxide film containing 0.1 at% or more and less than 30 at% of Mg and 12 at% or more and 80 at% or less of Si, with Cu being restricted to less than 0.6 at%, and a second film formed on at least a part of the first film and having a siloxane bond, in which in a spectrum obtained by injecting parallel polarized light at an incident angle of 75° into a surface on which the first film and the second film have been formed, by use of Fourier transform infrared spectroscopy, when a base line is drawn from 1,026 $cm^{-1}$ to 1,084 $cm^{-1}$, an area of a peak occurring near 1,057 $cm^{-1}$ is 0.019 or more.

Here, the Mg amount, Si amount and Cu amount in the first film are a value as measured by high-frequency Glow Discharge-Optical Emission Spectroscopy (GD-OES).

The aluminum alloy substrate can be formed of, for example, an Al-Mg alloy, an Al-Cu-Mg alloy, an Al-Mg-Si alloy, or an Al-Zn-Mg alloy.

In the aluminum alloy material of the present invention, an adhesive resin layer including an adhesive resin may have been formed on an outermost surface of a portion where the first film and the second film have been formed.

The joined body according to the present invention uses the above-described aluminum alloy material. The joined body of the present invention may have, for example, a configuration where aluminum alloy materials having the first film and the second film have been disposed to face one another across portions having formed therein the first film and the second film and joined via an adhesive resin, or may have a configuration where, to a portion having formed therein the first film and the second film of an aluminum alloy material having the first film and the second film has been joined a resin formed article or another aluminum alloy material having not formed therein the first film and the second film, via an adhesive resin.

A configuration may also be employed where an aluminum alloy material having the first film and the second film and further having an adhesive resin layer and an aluminum alloy material having the first film and the second film and not having an adhesive resin layer have been disposed by arranging a portion having formed therein the adhesive resin layer and a portion having formed therein the first film and the second film to face one another and joined via the adhesive resin layer.

Alternatively, a configuration may also be employed where, to a portion having formed therein an adhesive resin layer of an aluminum alloy material having the first film and the second film and further having the adhesive resin layer has been joined a resin formed article or another aluminum alloy material having not formed therein the first film and the second film.

The resin formed article may be, for example, a fiber-reinforced plastic formed article.

The automotive part according to the present invention is a part using the joined body above.

The method for manufacturing an aluminum alloy material of the present invention includes a first film forming step of forming a first film including an oxide film on at least a part of a surface of an aluminum alloy substrate, and a second film forming step of forming a second film on at least a part of the first film by a silane coupling treatment, in which the first film forming step includes a heat treatment stage and after the heat treatment stage, an etching treatment stage and a silicate treatment stage, the silicate treatment stage is provided after the etching treatment stage or simultaneously with the etching treatment stage, an etching amount in the etching treatment stage is controlled to less than 700 nm, and as the silicate treatment stage, a treatment is performed by using a silicate-containing aqueous solution.

In the first film forming step, the silicate treatment stage may be provided after the etching treatment stage and as the etching treatment stage, at least one of an acid treatment and an alkali solution treatment may be performed.

In the first film forming step, the silicate treatment stage may be provided simultaneously with the etching treatment stage, and the silicate-containing aqueous solution may be an acidic or alkaline aqueous solution containing a silicate.

The method for manufacturing an aluminum alloy material of the present invention may further include a step of forming an adhesive resin layer on an outermost surface of a portion where the first film and the second film have been formed.

In the method for manufacturing an aluminum alloy material of the present invention, the aluminum alloy substrate can be formed of, for example, an Al-Mg alloy, an Al-Cu-Mg alloy, an Al-Mg-Si alloy, or an Al-Zn-Mg alloy.

ADVANTAGE OF THE INVENTION

According to the present invention, an aluminum alloy material being resistant to reduction in the adhesive strength and exhibiting excellent adhesion durability even when exposed to a high-temperature humid environment can be realized.

BRIEF DESCRIPTION OF THE DRAWINGS

[Fig. 1] Fig. 1 is a cross-sectional view schematically illustrating the configuration of the aluminum alloy material according to a first embodiment of the present invention.
[Fig. 2] Fig. 2 is a flowchart illustrating the method for manufacturing the aluminum alloy material illustrated in Fig. 1.
[Fig. 3] Fig. 3 is a cross-sectional view schematically illustrating the configuration of the aluminum alloy material according to a modification example of the first embodiment of the present invention.
[Fig. 4] Fig. 4 is a flowchart illustrating the method for manufacturing the aluminum alloy material illustrated in Fig. 3.
[Fig. 5] Fig. 5 is a cross-sectional view schematically illustrating a configuration example of the joined body according to a second embodiment of the present invention.
[Fig. 6A] Fig. 6A is a cross-sectional view schematically illustrating another configuration example of the joined body according to the second embodiment of the present invention.
[Fig. 6B] Fig. 6B is a cross-sectional view schematically illustrating another configuration example of the joined body according to the second embodiment of the present invention.
[Fig. 7] Fig. 7 is a cross-sectional view schematically illustrating another configuration example of the joined body according to the second embodiment of the present invention.
[Fig. 8A] Fig. 8A is a cross-sectional view schematically illustrating another configuration example of the joined body according to the second embodiment of the present invention.
[Fig. 8B] Fig. 8B is a cross-sectional view schematically illustrating another configuration example of the joined body according to the second embodiment of the present invention.
[Fig. 9A] Fig. 9A is a side view schematically illustrating the method for measuring a cohesive failure rate.

[Fig. 9B] Fig. 9B is a plan view schematically illustrating the method for measuring a cohesive failure rate.

MODE FOR CARRYING OUT THE INVENTION

The mode for carrying out the present invention is described in detail below. However, the present invention is not limited to the embodiments described below.

(First Embodiment)

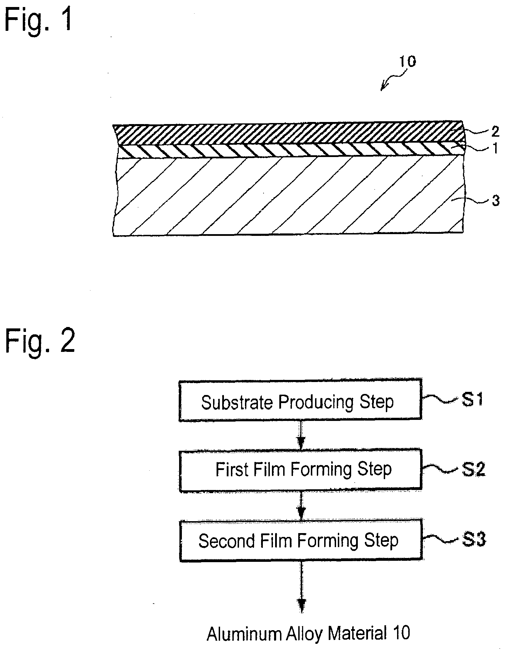

First, the aluminum alloy material according to a first embodiment of the present invention is described. Fig. 1 is a cross-sectional view schematically illustrating a configuration of the aluminum alloy material of this embodiment. As illustrated in Fig. 1, in the aluminum alloy material 10 of this embodiment, a first film 1 (hereinafter, sometimes referred to as "film 1") composed of an oxide film is formed on at least a part of the surface of an aluminum alloy substrate 3 (hereinafter, sometimes referred to as "substrate 3"), and a second film 2 (hereinafter, sometimes referred to as "film 2") having a siloxane bond is formed on at least a part of the first film 1.

[Substrate 3]

The substrate 3 is composed of an aluminum alloy. The aluminum alloy forming the substrate 3 is not particularly limited in its type and may be appropriately selected and used according to use of the part into which processed from various aluminum alloys of non-heat-treatment type or heat-treatment type prescribed in JIS or approximate to JIS. The aluminum alloy of non-heat-treatment type includes pure aluminum (1000-series), an Al-Mn alloy (3000-series), an Al-Si alloy (4000-series), and an Al-Mg alloy (5000-series). The aluminum alloy of heat-treatment type includes an Al-Cu-Mg alloy (2000-series), an Al-Mg-Si alloy (6000-series), and an Al-Zn-Mg alloy (7000-series).

For example, in the case of using the aluminum alloy material 10 of this embodiment for an automotive part, in view of strength, the substrate 3 preferably has a 0.2% yield strength of 100 MPa or more. The aluminum alloy capable of forming a substrate satisfying such a property includes one containing a relatively large amount of magnesium, such as 2000-series, 5000-series, 6000-series, and 7000-series, and these alloys may be tempered, if desired. Among various aluminum alloys, a 6000-series aluminum alloy is preferably used, because it has excellent age hardenability, contains relatively small amounts of alloy elements, and is excellent in the scrap recyclability and formability.

[Film 1]

The first film 1 (sometimes simply referred to as "film 1 ") is preferably an oxide film (an aluminum-containing oxide film; hereinafter, sometimes referred to as "oxide film") containing 0.1 at% or more and less than 30 at% of Mg and 12 at% or more and 80 at% or less of Si, with Cu being restricted to less than 0.6 at%. The film 1 is provided so as to enhance the adhesion durability when exposed to a high-temperature humid environment. The preferable range of the amount of each component contained in the film 1 is described below.

<Mg Content>

The aluminum alloy constituting the substrate of the aluminum alloy material usually contains magnesium as an alloy component and when an oxide film as a composite oxide of aluminum and magnesium is formed on a surface of such a substrate 3, magnesium is present in an enriched state on the surface. Accordingly, when an adhesive resin layer is formed on the oxide film, the magnesium on the surface works out to a weak boundary layer at the adhesion interface and causes reduction in the initial adhesiveness.

In addition, in a high-temperature humid environment susceptible to penetration of water, oxygen, chloride ion, etc., Mg gives rise to hydration of the interface with the adhesive resin layer or dissolution of the substrate to reduce the adhesion durability of the aluminum alloy material. Specifically, if the Mg content in the oxide film is 30 at% or more, the adhesion durability of the aluminum alloy material tends to be reduced. Accordingly, in the aluminum alloy material 10 of this embodiment, the Mg content in the first film 1 composed of an oxide film is preferably restricted to less than 30 at%. By this means, the adhesion durability can be enhanced. From the viewpoint of enhancing the adhesion durability, the Mg content in the film 1 is more preferably less than 25 at%, still more preferably less than 20 at%, yet still more preferably less than 10 at%.

On the other hand, the lower limit value of the Mg content in the film 1 is preferably 0.1 at% or more in view of profitability. The Mg content in the film 1 as used herein can be measured by high-frequency glow discharge-optical emission spectroscopy (GD-OES).

The method for adjusting the Mg content in the film 1 is not particularly limited but, for example, a method of surface-treating with an acid such as nitric acid, sulfuric acid and hydrofluoric acid, or a mixed acid, or with an alkali solution containing potassium hydroxide, sodium hydroxide, silicates, carbonate, etc., may be applied. In this method, the Mg content in the film 1 (oxide film) is adjusted by dissolving magnesium in an acid or an alkali solution, and the Mg content in the film 1 can be controlled to the above-described range by adjusting the treatment time, the temperature, or the concentration or pH of the surface treatment solution.

<Si Content>

Silicon has an effect of stabilizing the surface of the first film 1 and furthermore, when the second film 2 is a film having a siloxane bond, has an effect of enhancing the adhesion to the second film 2. Accordingly, the adhesion durability can be increased by incorporating silicon into the first film 1.

However, if the Si content in the film 1 is less than 12 at%, the above-described effect tends to be reduced, and if the Si content exceeds 80 at%, spot weldability or uniformity of a chemical conversion treatment is likely to be deteriorated. For this reason, in the aluminum alloy material 10 of this embodiment, the Si content in the first film 1 composed of an oxide film is set to be preferably from 12 to 80 at%.

From the viewpoint of enhancing the adhesion durability, the Si content in the film 1 is preferably 12 at% or more, more preferably 15 at% or more. In view of spot weldability or uniformity of a chemical conversion treatment, the Si content in the film 1 is preferably 80 at% or less, more preferably 70 at% or less, still more preferably 60 at% or less.

In order to control the Si content in the first film 1, it is important to treat the oxide film with an aqueous solution containing a silicate such as sodium silicate or potassium silicate before forming the second film 2. For example, if pickling is performed after the silicate treatment, the Si content in the first film 1 is reduced, failing in obtaining sufficient adhesion durability. The silicate concentration is not specified, but the treatment with an aqueous solution of 0.001 mass% or more is preferred. In the case of applying rinsing with water after the silicate treatment, the treatment with an aqueous solution of more than 0.1 mass% is preferred. The pH of the treatment solution is also not particularly limited, but since precipitation may occur with a solution other than an alkaline solution, the pH is preferably 10.5 or more. In the case of not applying rinsing after the silicate treatment, the treatment with an aqueous solution having a concentration of 0.001 mass% or more and 1 mass% or less is preferred. The treatment with a silicate-containing aqueous solution allows to increase the Si content in the first film 1 and likely increases the later-described M-O-Si bonding amount.

<Cu Content>

When the first film 1 is formed, if the substrate 3 is subjected to excessive etching by a degreasing step, a pickling step, etc., Cu contained in the substrate 3 is enriched in the surface to increase the Cu content of the first film 1. If Cu is present in the surface of the first film 1, the adhesion force with a siloxane bond-containing film 2 as the second film decreases.

Accordingly, in the aluminum alloy material of this embodiment, the Cu content in the first film 1 is preferably restricted to less than 0.6 at%. From the viewpoint of enhancing the adhesion to a siloxane bond-containing film 2 as the second film, the Cu amount in the first film 1 is more preferably less than 0.5 at%.

In order to control the Cu content in the first film 1, the etching amount by pretreatment must be adjusted, but the etching method is not limited and, for example, the same treatment method as described for the numerical value limitation of Mg may be applied. That is, for example, etching by a treatment with an acid or alkali solution can be performed.

The etching amount in the etching treatment stage, as used in the description of the present invention, is the dissolution amount of the oxide film or the substrate including the oxide film, and by measuring the decrease in weight between before and after the etching treatment, it can be estimated therefrom as the thickness (film thickness). For convenience, the conversion to the film thickness from the decrease in weight is performed by calculating as the thickness of aluminum with the help of the density of aluminum of 2.7 $g/cm^3$. In the case where in addition to the oxide film, part of the substrate below the oxide film is also etched, the total of etching amounts of the oxide film and the substrate is taken as the etching amount.

[M-O-Si Bonding Amount]

When a siloxane bond-containing film 2 is formed on the above-described film 1 composed of an oxide film, an M-O-Si bond is formed between these films. Here, "M" is an element contained in the aluminum alloy substrate 3 and, specifically, is Al, Mg, etc. incorporated into the film 1.

The M-O-Si bond is the main bond between the first film 1 composed of an oxide film and the siloxane bond-containing second film 2, and the bonding amount thereof is affected by the structure of the oxide film constituting the first film 1. In the spectrum obtained by injecting parallel polarized light at an incident angle of 75° into the surface on which the first film 1 and the second film 2 have been formed, by use of Fourier transform infrared spectroscopy, when a base line is drawn from 1,026 cm$^{-1}$ to 1,084 cm$^{-1}$, the M-O-Si bonding amount can be determined from the area of a peak assigned to M-O-Si bond and occurring near 1,057 cm$^{-1}$. The position of the peak assigned to M-O-Si bond shifts in the range of approximately from 1,045 to 1,065 cm$^{-1}$ depending on the type or proportion of M.

In the aluminum alloy material 10 of this embodiment, the area of a peak occurring near 1,057 cm$^{-1}$ calculated by the method above, is 0.019 or more. If the area of the peak assigned to M-O-Si bond is less than 0.019, the rate of occurrence of interfacial peeling at the interface between the first film 1 and the second film 2 is increased, and desired adhesion durability cannot be obtained. From the viewpoint of enhancing the adhesion durability, the area of the peak assigned to M-O-Si bond is preferably 0.022 or more, more preferably 0.025 or more.

<Film Thickness>

The thickness of the film 1 (oxide film) is preferably 1 to 30 nm. If the thickness of the film 1 is less than 1 nm, adsorption of an ester component in a rust preventive oil used in producing the substrate 3 or in a press oil used in manufacturing a joined body or an automotive part from the aluminum alloy material 10 is suppressed. Accordingly, the degreasing property, chemical conversion property, and adhesion durability of the aluminum alloy material 10 can be ensured even without providing the film 1 (oxide film). However, since control of the thickness of the film 1 to less than 1 nm requires excessive acid cleaning, etc., the productivity is poor and the practical utility is likely to be reduced. In addition, alkali degreasing or excessive etching with an acid may give rise to surface enrichment of Cu contained in the substrate 3 and may cause reduction in the adhesion durability. For this reason, the etching amount in pretreatment must be controlled to less than 700 nm.

On the other hand, if the thickness of the film 1 exceeds 30 nm, the film amount becomes excessive, and unevenness is likely to be formed on the surface. When unevenness is formed on the film 1 surface, for example, a chemical macule is readily produced during chemical conversion treatment performed before coating step in an automotive use, and as a result, the chemical conversion property is deteriorated. In view of chemical conversion property, productivity, etc., the thickness of the film 1 (oxide film) is more preferably 2 nm or more and less than 20 nm.

[Film 2]

The second film 2 (sometimes simply referred to as "film 2") is a siloxane bond-containing film treated with a silane coupling solution. The second film 2 is preferably formed in a thin and uniform manner on the film 1 but may be applied like islands on the film 1.

However, if the film amount of the film 2 is too small, the film is susceptible to the effects of elements on the substrate 3 surface, and if the film amount of the film 2 is too large, the film 2 itself may undergo cohesion failure, resulting in reduction of the adhesion durability. From the viewpoint of enhancing the adhesion durability, the film amount of the film 2 is preferably 0.01 mg/m$^2$ or more and less than 30 mg/m$^2$. The film amount of the film 2 is more preferably less than 15 mg/m$^2$, still more preferably less than 6 mg/m$^2$.

[Manufacturing Method]

The method for manufacturing the aluminum alloy material of this embodiment is described below. Fig. 2 is a flowchart illustrating the method for manufacturing the aluminum alloy material 10 of this embodiment. As illustrated in Fig. 2, when the aluminum alloy material 10 of this embodiment is manufactured, a substrate producing step S1, a first film forming step S2, and a second film forming step S3 are performed. In the following, each step is described.

<Step S 1: Substrate Producing Step>

The shape of the substrate is not particularly limited and may be plate shape, and in addition, may be any shape that can be taken on as a cast material, a forged material, an extruded material (e.g., hollow rod) or the like, based on the shape, etc. of the part produced by using the aluminum alloy material. In the substrate producing step S1, in the case of producing a plate-like substrate (base plate) as an example, the base plate is produced, for example, by the following procedure. First, an aluminum alloy having a predetermined composition is melted and cast by continuous casting to produce a slab (melting and casting step). The produced slab is then subjected to a homogenizing heat treatment (homogenizing heat treatment step). Thereafter, the homogenizing heat-treated slab is subjected to hot rolling to produce a hot-rolled plate (hot rolling step). This hot-rolled plate is subjected to rough annealing or process annealing at 300 to 580°C and to at least one cold rolling with a final cold rolling reduction of 5% or more to produce a cold-rolled plate (base plate) having a predetermined thickness (cold rolling step).

In the cold rolling step, the temperature of rough annealing or process annealing is preferably set to 300°C or more, and by this means, the effect of enhancing the formability is more successfully exerted. The temperature of rough annealing or process annealing is preferably set to 580°C or less, and by this means, reduction in the formability due to occurrence of burning is suppressed with ease. On the other hand, the final cold rolling reduction is preferably set to 5% or more, and by this means, the effect of enhancing the formability is more successfully exerted. The homogenizing heat treatment and the hot rolling are not particularly limited in their conditions and can be performed under the conditions employed for usually obtaining a hot-rolled plate. In addition, process annealing may not be performed.

<Step S2: first film forming step>

In the step of forming a first film (first film forming step), a first film 1 composed of an oxide film is formed on a part or the whole of the surface of the substrate 3 produced in the step S1, i.e., the substrate producing step. Specifically, this step includes a heat treatment stage of heat treating the substrate 3 to form an oxide film and after the heat treatment stage, an etching treatment stage and a silicate treatment stage. Here, the silicate treatment stage is performed after the etching treatment stage or performed simultaneously with the etching treatment stage. In addition, the etching amount in the etching treatment stage is controlled to less than 700 nm, and as the silicate treatment stage, a treatment is performed by using a silicate-containing aqueous solution. Consequently, a first film is formed such that the M-O-Si bonding amount between the first film and the second film falls in a specific range and preferably, each of the Mg mount, Si amount, and Cu amount in the first film falls in a specific range.

In the heat treatment, the substrate 3 is heated, for example, at 400 to 580°C to form an oxide film constituting the first film 1 on the substrate 3 surface. The heat treatment also has an effect of adjusting the strength of the aluminum alloy material 10. The heat treatment as used herein is a solution treatment when the substrate 3 is formed of a heat-treatment type aluminum alloy, and is a heat treatment in annealing (final annealing) when the substrate 3 is formed of a non-heat-treatment type aluminum alloy.

From the viewpoint of enhancing the strength, this heat treatment is preferably rapid heating at a heating rate of 100°C/min or more. In addition, when rapid heating is performed by setting the heating temperature to 400°C or more, the strength of the aluminum alloy material 10 or the strength of the aluminum alloy material 10 after post-coating heating (baking) can be more increased. On the other hand, when rapid heating is performed by setting the heating temperature to 580°C or less, deterioration of the formability due to occurrence of burning can be suppressed. Furthermore, from the viewpoint of enhancing the strength, the holding time in the heat treatment is preferably set to be from 3 to 30 seconds. When a substrate 3 is thus heated at a heating temperature of 400 to 580°C, an oxide film having a thickness of, for example, 1 to 30 nm is formed on the substrate 3 surface.

The surface treatment of the oxide film formed by the method above is performed such that the M-O-Si bonding amount between the first film and the second film falls in a specific range or preferably, each of the Mg amount, Si amount, and Cu amount in the first film 1 falls in a specific range. Specifically, for example, as the etching treatment stage, a treatment is performed by using, individually or in combination, an acid such as nitric acid, sulfuric acid and hydrofluoric acid, a mixed acid obtained by mixing two or more kinds of acids, an alkali solution containing sodium hydroxide, potassium hydroxide, silicate, carbonate, etc., or an alkali solution having mixed therein two or more kinds of alkalis, and as the silicate treatment stage, the oxide film formed on the substrate 3 surface is treated by using a silicate-containing aqueous solution. Here, the silicate treatment stage is performed as the final stage of substantial film formation in the first film forming step, and pickling is not performed after the silicate treatment. However, in the case of performing water washing and/or drying after the treatment with a silicate-containing aqueous solution, the water washing and/or drying should be included in the silicate treatment stage.

In the first film forming step of the step S1, the treatment with an acid or an alkali solution (etching treatment) and the treatment with a silicate-containing aqueous solution (silicate treatment) in the first film 1 may be performed by one treatment but may also be performed individually. Specifically, for example, the oxide film may be treated by using an acidic or alkaline solution containing a silicate. Alternatively, for example, the oxide film may be pretreated by using an acid or an alkali solution and thereafter treated by using a silicate-containing aqueous solution. In view of cost reduction, the oxide film is preferably treated by using an acidic or alkaline aqueous solution containing a silicate.

Excessive etching of a copper-containing aluminum alloy brings about copper enrichment in the substrate 3 surface and in a high-temperature humid environment that is a degradation environment, causes deterioration of the adhesive resin. Accordingly, the treatment conditions must be adjusted such that the etching amount of the oxide film is less than 700 nm, preferably less than 500 nm. The treatment conditions can be appropriately set by taking into account, for example, the alloy composition of the substrate 3 or the thickness of the oxide film and are not particularly limited, but in the case of a treatment using an acid solution, the conditions of, for example, a pH of 2 or less, a treatment temperature of 10 to 80°C, and a treatment time of 1 to 60 seconds may be applied. In the case of a treatment using an alkali solution, the conditions of, for example, a pH of 10 or more, a treatment temperature of 10 to 80°C, and a treatment time of 1 to 60 seconds may be applied.

<Step S3: second film forming step>

In step S3, as a step of forming a second film (second film forming step), a second film 2 having a siloxane bond is formed. The second film 2 can be formed, for example, by using a silane coupling agent having a reactive functional group such as amino group, epoxy group, methacrylic group, vinyl group, and mercapto group. The functional group of the silane coupling agent forming the second film 2 is not limited to those described above, and a silane coupling agent having various functional groups may be appropriately selected and used based on the adhesive resin employed.

From the viewpoint of enhancing the adhesion durability, the applied amount of the silane coupling agent is preferably controlled such that the film amount after drying becomes 0.01 $mg/m^2$ or more and less than 30 $mg/m^2$ per one surface. The film amount of the film 2 can be easily controlled, for example, by diluting the silane coupling agent with a solvent (in addition to an organic solvent, including water) to lower the solid content concentration or viscosity thereof or by adjusting the applied amount in wet state by the coater number.

The method for applying the silane coupling agent is not particularly limited, and an existing method may be applied. Specifically, for example, an applying method by dipping, a method using various coaters such as roll coater, bar coater, gravure coater, microgravure coater, reverse gravure coater, and dip coater, and a method by spray coating may be applied.

After applying the silane coupling agent, the silane coupling agent is dried by heating. Drying by applying heat is performed so as to promote bonding (M-O-Si bond) between the second film 2 and the first film 1, and the hating temperature is preferably 60°C or more, more preferably 75°C or more, still more preferably 90°C or more. If the heating temperature is too high, decomposition of the functional group of the silane coupling agent occurs or the properties of the aluminum alloy are affected. Accordingly, the heating temperature is preferably 250°C or less, more preferably 200°C or less, still more preferably 150°C or less. The drying time may vary depending on the heating temperature but is preferably 2 seconds or more, more preferably 5 seconds or more, still more preferably 10 seconds or more. The drying time is preferably 20 minutes or less, more preferably 5 minutes or less, still more preferably 2 minutes or less.

<Other Steps>

The production process of the aluminum alloy material 10 of this embodiment may include other steps between respective steps or before or after each step, as long as it does not adversely affect each of the steps above. For example, after the second film forming step S3, a pre-aging treatment step of applying a pre-aging treatment may be provided. The pre-aging treatment is preferably performed by low-temperature heating at 40 to 120°C for 8 to 36 hours within 72 hours. By applying the pre-aging treatment under these conditions, formability and the strength after baking can be enhanced. In addition, for example, a foreign matter-removing step of removing a foreign matter on the surface of the aluminum alloy material 10, or a defect-removing step of removing a defect generated in each step, may be performed.

Before production of a joined body or before processing into an automotive part, the surface of the manufactured aluminum alloy material 10 is coated with a press oil. A press oil containing an ester component is mainly used. The method or conditions for applying a press oil onto the aluminum alloy material 10 are not particularly limited, and normal methods or conditions for applying a press oil may be widely applied. For example, the aluminum alloy material 10 may be immersed in a press oil containing ethyl oleate as the ester component. The ester component is also not limited to ethyl oleate, but various ones such as butyl stearate and sorbitan monostearate may be utilized.

As described in detail above, in the aluminum alloy material 10 of this embodiment, in a first film forming step of forming a first film composed of an oxide film, the etching amount is controlled to less than 700 nm and a treatment with a silicate-containing aqueous solution is applied as the final stage of substantial film formation in this step to form a first film 1, and thereafter a second film 2 is formed on at least a part of the first film 1 by a silane coupling treatment. As a result, the M-O-Si bonding amount formed at the interface between the first film 1 and the second film 2 can be controlled to 0.019 or more as the area of a peak occurring near 1,057 $cm^{-1}$, in the spectrum obtained by injecting parallel polarized light at an incident angle of 75° by use of Fourier transform infrared spectroscopy, when a base line is drawn from 1,026 $cm^{-1}$ to 1,084 $cm^{-1}$, making it possible to obtain excellent adhesion durability. In addition, the aluminum alloy material 10 according to one preferred embodiment has an oxide film (film 1) containing a specific amount of Mg, so that dissolving out of the substrate 3 can be inhibited and accompanied alkalization of the substrate 3 surface can be inhibited and deterioration of the adhesive resin can be thus suppressed. Furthermore, a specific amount of Si is incorporated into the film 1, and the Cu amount in the film 1 is restricted to less than a specific amount, which leads to enhanced adhesion between the film 1 and the film 2. As a result, even when the aluminum alloy material 10 of this embodiment is exposed to a high-temperature humid environment, interfacial peeling is restrained, and reduction in the adhesive strength can be suppressed over a long period of time.

In the techniques described in Patent Documents 4 and 5 described above, a surface treatment using a silicate is performed as well, but since a silane coupling treatment is not performed in the subsequent step, the surface treatment layer by the silicate treatment is put into direct contact with the adhesive resin. Consequently, a chemical bond is basically not formed, and the effect of enhancing adhesion durability as in the present invention is not obtained.

(Modification Example of First Embodiment)

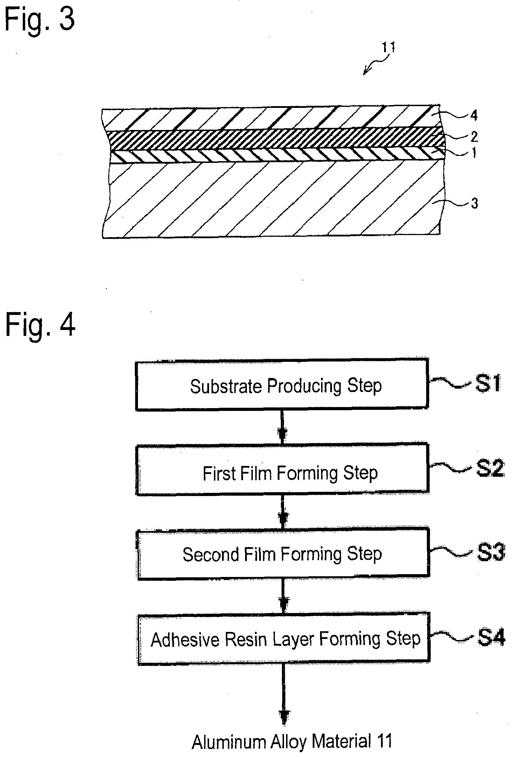

The aluminum alloy material according to a modification example of the first embodiment of the present invention is described below. Fig. 3 is a cross-sectional view schematically illustrating a configuration of the aluminum alloy material according to this modification example. In Fig. 3, the same constituents as those in the aluminum alloy material 10 illustrated in Fig. 1 are provided with the same reference signs, and detailed descriptions thereof are omitted. As illustrated in Fig. 3, in the aluminum alloy material 11 of this modification example, an adhesive resin layer 4 composed of an adhesive resin is formed so that it covers the first film 1 and the second film 2 of the aluminum alloy material of the first embodiment.

[Adhesive Resin Layer 4]

The adhesive resin layer 4 is composed of an adhesive resin, etc., and the aluminum alloy material 11 of this modification example is joined with another aluminum alloy material via the adhesive resin layer 4. The adhesive resin constituting the adhesive resin layer 4 is not particularly limited, and an adhesive resin having been conventionally employed when joining an aluminum alloy material, such as thermosetting epoxy resin, acrylic resin and urethane resin, may be used.

The thickness of the adhesive resin layer 4 is not particularly limited as well but is preferably from 10 to 500 $\mu$m, more preferably from 50 to 400 $\mu$m. If the thickness of the adhesive resin layer 4 is less than 10 $\mu$m, in the case where the aluminum alloy material 11 is jointed to another aluminum alloy material not having an adhesive resin layer via the adhesive resin layer 4, high adhesion durability may not be obtained. On the other hand, if the thickness of the adhesive resin layer 4 exceeds 500 $\mu$m, the adhesive strength may be reduced.

[Manufacturing Method]

Next, the method for manufacturing the aluminum alloy material 11 of this modification example is described below. Fig. 4 is a flowchart illustrating the method for manufacturing the aluminum alloy material 11 of this modification example. As illustrated in Fig. 4, in manufacturing the aluminum alloy material 11 of this modification example, an adhesive resin layer forming step S4 is performed, in addition to steps S 1 to S3 described above.

[Step S4: adhesive resin layer forming step]

In the adhesive resin layer forming step S4, an adhesive resin layer 4 composed of an adhesive, etc. is formed so that it covers the first film 1 and the second film 2. The method for forming the adhesive resin layer 4 is not particularly limited but includes, for example, a method where when the adhesive resin is solid, it is pressure bonded by applying heat or is dissolved in a solvent to form a solution and then sprayed or applied onto the surfaces of the film 1 and the film 2 or when the adhesive resin is liquid state, it is directly sprayed or applied.

Regarding the aluminum alloy material 11 of this modification example as well, similarly to the first embodiment as described above, a pre-aging treatment step of applying a pre-aging treatment may be provided after the first film forming step S1, the second film forming step S2 and/or the adhesive resin layer forming step S4.

In the aluminum alloy material of this modification example, since an adhesive resin layer is previously provided, an operation of, for example, applying an adhesive resin onto the surface of the aluminum alloy material may be omitted in manufacturing a joined body or an automotive part. Here, the configurations and effects in the aluminum alloy material of this modification example, except for those described above, are the same as those in the first embodiment.

(Second Embodiment)

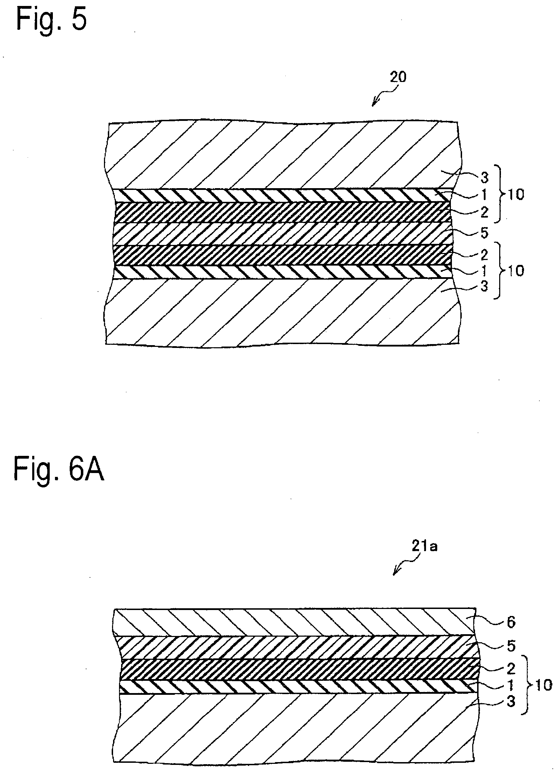

The joined body according to the second embodiment of the present invention is described below. The joined body of this embodiment uses the aluminum alloy material of the first embodiment or a modification example thereof, described above. Each of Figs. 5 to 8 is a cross-sectional view schematically illustrating a configuration example of the joined body of this embodiment. In Figs. 5 to 8, the same constituents as those in the aluminum alloy materials 10 and 11 illustrated in Figs. 1 and 3 are provided with the same reference signs, and detailed descriptions thereof are omitted.

[Configuration of Joined Body]

The joined body of this embodiment may have, for example, as in the joined body 20 illustrated in Fig. 5, a configuration where two sheets of the aluminum alloy material 10 illustrated in Fig. 1 are disposed by arranging the faces having formed thereon the first film 1 and the second film 2 to face one another and joined via an adhesive resin 5. That is, in the joined body 20, one surface of the adhesive resin 5 is joined to the film 2 side of one aluminum alloy material 10, and another surface is jointed to the film 2 side of the other aluminum alloy material 10.

As the adhesive resin 5 in the joined body of this embodiment, the same adhesive resin as that constituting the adhesive resin layer 4 above may be used. Specifically, a thermosetting epoxy resin, acrylic resin, urethane resin, etc. may be used for the adhesive resin 5. The thickness of the adhesive resin 5 is not particularly limited, but from the viewpoint of enhancing the adhesive strength, it is preferably from 10 to 500 $\mu$m, more preferably from 50 to 400 $\mu$m.

In the joined body 20, as described above, there are the films 1 and the films 2 of the aluminum alloy material 10 of the first embodiment above both surfaces of the adhesive resin 5, and therefore, in the case of applying to an automotive part, even when exposed to a high-temperature humid environment, the adhesive strength at the interface between the adhesive resin 5 and the film 1 or the film 2 is less likely to be reduced, as a result, the adhesion durability is enhanced. Furthermore, in the joined body 20 of this embodiment, as to general adhesive resins conventionally employed for joining of an aluminum alloy material, the adhesion durability at the interface is enhanced without being affected by the type of the adhesive resin 5.

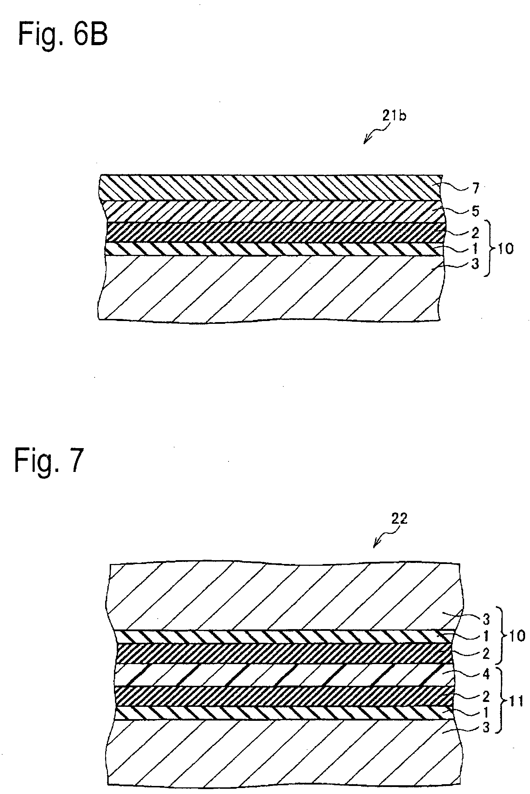

In addition, as in the joined body 21a illustrated in Fig. 6A or the joined body 21b illustrated in Fig. 6B, a configuration may be employed where to the surface having formed therein the first film 1 and the second film 2 of the aluminum alloy material 10 illustrated in Fig. 1 has been joined a resin formed article 7, or another aluminum alloy material 6 having not formed therein the first film and the second film, via an adhesive resin 5.

Here, for the another aluminum alloy material 6 having not formed therein the first film and the second film, the similar one as the substrate 3 above may be used, and specifically, one composed of various aluminum alloys of non-heat-treatment type or heat-treatment type prescribed in JIS or approximate to JIS may be used.

As the resin formed article 7, for example, use can be made of a fiber-reinforced plastic formed article formed of various fiber-reinforced plastics such as glass fiber-reinforced plastic (GFRP), carbon fiber-reinforced plastic (CFRP), boron fiber-reinforced plastic (BFRP), aramid fiber-reinforced plastic (AFRP, KFRP), polyethylene fiber-reinforced plastic (DFRP), and Zylon fiber-reinforced plastic (ZFRP). By using such a fiber-reinforced plastic formed article, the joined body can be reduced in weight while maintaining a given strength.

For the resin formed article 7, other than the fiber-reinforced plastic above, use can also be made of a non-fiber-reinforced engineering plastic, such as polypropylene (PP), acrylic-butadiene-styrene copolymer (ABS) resin, polyurethane (PU), polyethylene (PE), polyvinyl chloride (PVC), nylon 6, nylon 6,6, polystyrene (PS), polyethylene terephthalate (PET), polyamide (PA), polyphenylene sulfide (PPS), polybutylene terephthalate (PBT), and polyphthalamide (PPA) .

In the joined bodies 21a and 21b illustrated in Fig. 6A and Fig. 6B, one surface of the adhesive resin 5 is joined to the first film 1 or second film 2 side and therefore, as with the joined body 20, in the case of applying to an automotive part, even when exposed to a high-temperature humid environment, the adhesion durability at the interface is enhanced without being affected by the type of the adhesive resin. In addition, the joined body 21b illustrated in Fig. 6B is lightweight, compared with a joined body of aluminum alloy materials, because the aluminum alloy material 10 is joined to a resin formed article 7, and use of this joined body 21b can realize further reduction in weight of an automobile. Here, the configurations and effects in the joined bodies 21a and 21b illustrated in Fig. 6A and Fig. 6B, except for those described above, are the same as those of the joined body 20 illustrated in Fig. 5.

Furthermore, as in the joined body 22 illustrated in Fig. 7, a configuration may be employed where the aluminum alloy material 11 having an adhesive resin layer 4 illustrated in Fig. 3 and the aluminum alloy material 10 not having an adhesive resin layer 4 illustrated in Fig. 1 are joined. Specifically, the film 1 and the film 2 of the aluminum alloy material 10 are joined to the adhesive resin layer 4 side of the aluminum alloy material 11. As a result, a configuration where each pair of films 1 or films 2 of two aluminum alloy materials 10 and 11 are disposed to face one another via the adhesive resin layer 4 of the aluminum alloy material 11.

In the joined body 22, both surfaces of the adhesive resin layer 4 are joined to the film 1 and film 2 sides and therefore, as with the joined body 20, in the case of applying the joined body 22 to an automotive part, even when exposed to a high-temperature humid environment, the adhesion durability at the interface is enhanced without being affected by the type of the adhesive resin. Here, the configurations and effects in the joined body 22 illustrated in Fig. 7, except for those described above, are the same as those of the joined body 20 illustrated in Fig. 5.

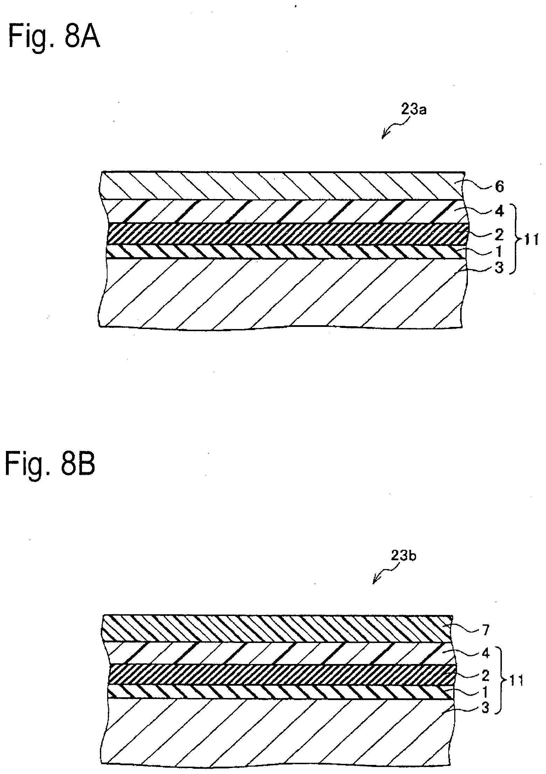

Furthermore, as in the joined body 23a illustrated in Fig. 8A or the joined body 23b illustrated in Fig. 8B, a configuration may be employed where to the adhesive resin layer 4 side of the aluminum alloy material 11 having an adhesive resin layer 4 illustrated in Fig. 3 has been joined another aluminum alloy material 6 having not formed therein the first film and the second film or a resin formed article 7 such as fiber-reinforced plastic formed article. In these joined bodies 23a and 23b, one surface of the adhesive resin layer 4 is joined to the film 1 and film 2 side and therefore, as with the joined body 20 above, in the case of applying the joined body 23 to an automotive part, even when exposed to a high-temperature humid environment, the adhesion durability at the interface is enhanced without being affected by the type of the adhesive resin.

In addition, since the aluminum alloy material 10 is joined to a resin formed article 7, the joined body 23b illustrated in Fig. 8B is lightweight, compared with a joined body of aluminum alloy materials, and is suitable for an automotive or vehicular part requiring weight reduction. Here, the configurations and effects in the joined bodies 23a and 23b illustrated in Fig. 8A and Fig. 8B, except for those described above, are the same as those of the joined body 20 illustrated in Fig. 5.

[Manufacturing Method]

As to the method for manufacturing, particularly, the method for joining, the joined bodies 20 to 23, a conventionally known joining method may be used. The method for forming the adhesive resin 5 into an aluminum alloy material is not particularly limited, but for example, an adhesive sheet having been produced previously by using the adhesive resin 5 may be used, or the adhesive resin 5 may be sprayed on or applied onto the surface of the siloxane bond-containing film 2 and thereby formed. As with the aluminum alloy materials 10 and 11, the surface of each of the joined bodies 20 to 23 may be applied with a press oil before processing into an automotive part.

Although not illustrated, when an aluminum alloy material in which films 1 composed of an oxide film and siloxane bond-containing films 2 are formed on both surfaces is used for the joined body of this embodiment, such an aluminum alloy material, another aluminum alloy material 6 having not formed therein films 1 and 2, or a resin formed article 7 can be further joined via the adhesive resin 5 or the adhesive resin layer 4.

In the joined body of this embodiment, in a first film forming step of forming a first film composed of an oxide film, the etching amount is controlled to less than 700 nm and a treatment with a silicate-containing aqueous solution is applied as the final stage of substantial film formation in this step to form a first film 1, and then a siloxane bond-containing second film 2 is formed on at least a part of the first film 1 by a silane coupling treatment, and furthermore, an adhesive resin or an adhesive resin layer is joined to the first film and second film side of the aluminum alloy material. As a result, the M-O-Si bonding amount formed at the interface between the first film 1 and the second film 2 can be controlled to 0.019 or more as the area of a peak occurring near 1,057 cm$^{-1}$, in the spectrum obtained by injecting parallel polarized light at an incident angle of 75° by use of Fourier transform infrared spectroscopy, when a base line is drawn from 1,026 cm$^{-1}$ to 1,084 cm$^{-1}$, making it possible to obtain excellent adhesion durability. In addition, the aluminum alloy material 10 according to one preferred embodiment has an oxide film (film 1) containing a specific amount of Mg, so that dissolving out of the substrate 3 can be inhibited and accompanied alkalization of the substrate 3 surface can be inhibited and deterioration of the adhesive resin can be thus suppressed. Furthermore, a specific amount of Si is incorporated into the film 1 and the Cu amount in the film 1 is restricted to less than a specific amount, which leads to enhanced adhesion between the film 1 and the film 2. Consequently, in the case of applying the joined body of this embodiment to an automotive part, even when exposed to a high-temperature humid environment, since the interface between the adhesive resin and the second film is chemically bonded and the adhesiveness between the second film and the first film is excellent, hydration of the first film is less likely to exercise its effect, and dissolving out of the aluminum alloy substrate can be inhibited.

(Third Embodiment)

The automotive part according to the third embodiment of the present invention is described below. The automotive part of this embodiment uses the joined body of the second embodiment described above and is, for example, an automotive panel.

The method for manufacturing the automotive part of this embodiment is not particularly limited, but a conventionally known manufacturing method may be applied. For example, cutting work, pressing work, etc. are applied to the joined bodies 20 to 23 illustrated in Figs. 5 to 8 to manufacture an automotive part in a predetermined shape.

The automotive part of this embodiment is manufactured from the joined body of the second embodiment above, so that even when exposed to a high-temperature humid environment, dissolving out of the aluminum alloy substrate can be inhibited substantially without being affected by hydration of the adhesive resin or adhesive resin layer and the oxide film (first film). As a result, in the automotive part of this embodiment, it becomes possible when exposed to a high-temperature humid environment to inhibit interfacial peeling and suppress the reduction in adhesive strength.

EXAMPLES

The effects of the present invention are specifically described below by referring to Examples of the present invention and Comparative Examples. In this Example, aluminum alloy materials were produced by using the following methods and conditions and evaluated for the adhesion durability, etc.

First film formation was performed as follows.

<Examples 1 and 2>

By using a 6000-series aluminum alloy of JIS 6016 (Mg: 0.54 mass%, Si: 1.11 mass%, Cu: 0.14 mass%), 1 mm-thick aluminum alloy cold-rolled sheets were produced by the above-described method. Each of the cold-rolled sheets was cut into a length of 100 mm and a width of 25 mm to provide a substrate. This substrate was alkali-degreased, then heat-treated to an actual achieving temperature of 550°C, and cooled.

Subsequently, the substrate was treated with a potassium hydroxide solution adjusted to pH of 10 or more under the conditions of a temperature of 10 to 80°C and a treatment time of 1 to 60 seconds and then washed with water.

Thereafter, a treatment with an aqueous solution containing 0.1 mass% or more of sodium silicate was performed under the conditions of a temperature of 10 to 80°C and a treatment time of 1 to 60 seconds, followed by washing with water and drying, to form a first film.

<Examples 3 and 4>

By using a 6000-series aluminum alloy of JIS 6016 (Mg: 0.54 mass%, Si: 1.11 mass%, Cu: 0.14 mass%), 1 mm-thick aluminum alloy cold-rolled sheets were produced by the above-described method. Each of the cold-rolled sheets was cut into a length of 100 mm and a width of 25 mm to provide a substrate. This substrate was alkali-degreased, then heat-treated to an actual achieving temperature of 550°C, and cooled.

Subsequently, the substrate was treated with an aqueous solution containing potassium hydroxide and sodium silicate and being adjusted to pH of 9 or more under the conditions of a temperature of 10 to 80°C and a treatment time of 1 to 60 seconds, then washed with water, and dried to form a first film.

<Examples 5 and 7>

By using a 6000-series aluminum alloy of JIS 6016 (Mg: 0.54 mass%, Si: 1.11 mass%, Cu: 0.14 mass%), 1 mm-thick aluminum alloy cold-rolled sheets were produced by the above-described method. Each of the cold-rolled sheets was cut into a length of 100 mm and a width of 25 mm to provide a substrate. This substrate was alkali-degreased, then heat-treated to an actual achieving temperature of 550°C, and cooled.

Subsequently, the substrate was treated with a potassium hydroxide solution adjusted to pH of 10 or more under the conditions of a temperature of 10 to 80°C and a treatment time of 1 to 60 seconds and then washed with water.

Thereafter, by using a solution containing fluoric acid and sulfuric acid at concentrations of 0.01 to 6 mol/L and being adjusted to pH of 2 or less, a hydrofluoric acid/sulfuric acid solution treatment was performed under the conditions of a temperature of 10 to 80°C and a treatment time of 1 to 60 seconds, followed by washing with water.

Furthermore, a treatment with an aqueous solution containing 0.1 mass% or more of sodium silicate was performed under the conditions of a temperature of 10 to 80°C and a treatment time of 1 to 60 seconds, followed by washing with water and drying, to form a first film.

<Examples 6 and 8>

By using a 6000-series aluminum alloy of JIS 6016 (Mg: 0.54 mass%, Si: 1.11 mass%, Cu: 0.14 mass%), 1 mm-thick aluminum alloy cold-rolled sheets were produced by the above-described method. Each of the cold-rolled sheets was cut into a length of 100 mm and a width of 25 mm to provide a substrate. This substrate was alkali-degreased, then heat-treated to an actual achieving temperature of 550°C, and cooled.

Subsequently, the substrate was treated with a potassium hydroxide solution adjusted to pH of 10 or more under the conditions of a temperature of 10 to 80°C and a treatment time of 1 to 60 seconds and then washed with water.

Thereafter, by using a solution containing nitric acid and being adjusted to pH of 2 or less, a nitric acid solution treatment was performed under the conditions of a temperature of 10 to 80°C and a treatment time of 1 to 60 seconds, followed by washing with water.

Furthermore, a treatment with an aqueous solution containing 0.1 mass% or more of sodium silicate was performed under the conditions of a temperature of 10 to 80°C and a treatment time of 1 to 60 seconds, followed by washing with water and drying, to form a first film.

<Examples 9 and 10>

By using a 6000-series aluminum alloy of JIS 6016 (Mg: 0.54 mass%, Si: 1.11 mass%, Cu: 0.14 mass%), 1 mm-thick aluminum alloy cold-rolled sheets were produced by the above-described method. Each of the cold-rolled sheets was cut into a length of 100 mm and a width of 25 mm to provide a substrate. This substrate was alkali-degreased, then heat-treated to an actual achieving temperature of 550°C, and cooled.

Subsequently, the substrate was treated with a potassium hydroxide solution adjusted to pH of 10 or more under the conditions of a temperature of 10 to 80°C and a treatment time of 1 to 60 seconds and then washed with water.

Thereafter, by using a solution containing hydrofluoric acid and sulfuric acid at concentrations of 0.01 to 6 mol/L and being adjusted to pH of 2 or less, a hydrofluoric acid/sulfuric acid solution treatment was performed under the conditions of a temperature of 10 to 80°C and a treatment time of 1 to 60 seconds, followed by washing with water.

Furthermore, a treatment with an aqueous solution containing 0.001 mass% or more of sodium silicate was performed under the conditions of a temperature of 10 to 80°C and a treatment time of 1 to 60 seconds, followed by drying without washing with water to form a first film.

<Examples 11 and 12>

By using a 6000-series aluminum alloy of JIS 6016 (Mg: 0.54 mass%, Si: 1.11 mass%, Cu: 0.14 mass%), 1 mm-thick aluminum alloy cold-rolled sheets were produced by the above-described method. Each of the cold-rolled sheets was cut into a length of 100 mm and a width of 25 mm to provide a substrate. This substrate was alkali-degreased, then heat-treated to an actual achieving temperature of 550°C, and cooled.

Subsequently, by using a solution containing sulfuric acid and being adjusted to pH of 2 or less, the substrate was subjected to a sulfuric acid solution treatment under the conditions of a temperature of 10 to 80°C and a treatment time of 1 to 60 seconds and then washed with water.

Furthermore, a treatment with an aqueous solution containing 0.1 mass% or more of sodium silicate was performed under the conditions of a temperature of 10 to 80°C and a treatment time of 1 to 60 seconds, followed by washing with water and drying, to form a first film.

<Comparative Example 1>

A first film was formed in the same manner as in Examples 5 and 7 except that the treatment with an aqueous solution containing sodium silicate was not performed, i.e., water washing and drying were performed after the hydrofluoric acid/sulfuric acid treatment.

<Comparative Example 2>

A first film was formed in the same manner as in Examples 5 and 7 except that the order of the fluoric acid/sulfuric acid solution treatment and the treatment with an aqueous solution containing sodium silicate was reversed.

<Comparative Example 3>

A first film was formed in the same manner as in Examples 6 and 8 except that the treatment with a potassium hydroxide solution was performed for more than 60 seconds.

Next, in each of Examples and Comparative Examples, a silane coupling agent containing an amino group was diluted with pure water to adjust the dilution ratio, and applied by the method described in Table 1 to form a second film in which the film amount after drying was controlled within 0.1 to 15 mg/m$^2$, and an aluminum alloy material was thereby produced. Drying after application of the silane coupling agent was performed at 100°C for 1 minute.

<Measurement of Components of First Film>

With respect to metal elements such as aluminum (Al), magnesium (Mg), copper (Cu), iron (Fe), and titanium (Ti) as well as elements such as oxygen (O), nitrogen (N), carbon (C), silicon (Si), and sulfur (S), the first film was measured for each component amount while performing sputtering in the thickness direction by high-frequency glow discharge-optical emission spectroscopy (GD-OES; Model JY-5000RF manufactured by HORIBA Jobin Yvon). In the case of magnesium (Mg), copper (Cu) and silicon (Si), the maximum concentration of each of magnesium (Mg), copper (Cu) and silicon (Si) in the oxide film is defined as the film concentration in the film. In the case of aluminum (Al), since the substrate affects it near the interface between the substrate and the first film, the concentration in the outermost surface is defined as the film concentration of aluminum (Al). In the concentration calculation of respective elements, among others, oxygen (O) and carbon (C) are susceptible to the effect of contamination at the outermost surface or in the vicinity thereof. Accordingly, in the concentration calculation of respective elements, the concentration was calculated excluding oxygen (O) and carbon (C). Here, oxygen (O) is likely to be affected by contamination at the outermost surface or in the vicinity thereof, making it difficult to measure its exact concentration, but there is no doubt that oxygen (O) was contained in the film 1 of all samples.

<Measurement of Etching Amount>

The etching amount is the dissolution amount of the oxide film or the substrate including the oxide film, and by measuring the decrease in weight between before and after the etching treatment, it was estimated therefrom as the thickness (film thickness). For convenience, the conversion to the film thickness from the decrease in weight was performed by calculating as the thickness of aluminum with the help of the density of aluminum of 2.7 g/cm$^3$.

<Measurement of M-O-Si Bonding Amount>

The M-O-Si bonding amount was, after formation of the second film, quantitatively determined by analysis with FT-IR (Fourier transform infrared spectrophotometer: MAGNA-750 SPECTROMETER manufactured by Nicolet). Specifically, in an FT-IR spectrum measured by using parallel polarized light at an incident angle of 75°, when a base line was drawn from 1,026 cm$^{-1}$ to 1,084 cm$^{-1}$, the area of a peak assigned to M-O-Si bond and occurring near 1,057 cm$^{-1}$ was determined by the analysis software provided with the apparatus above.

<Cohesive Failure Rate (Adhesion Durability)>

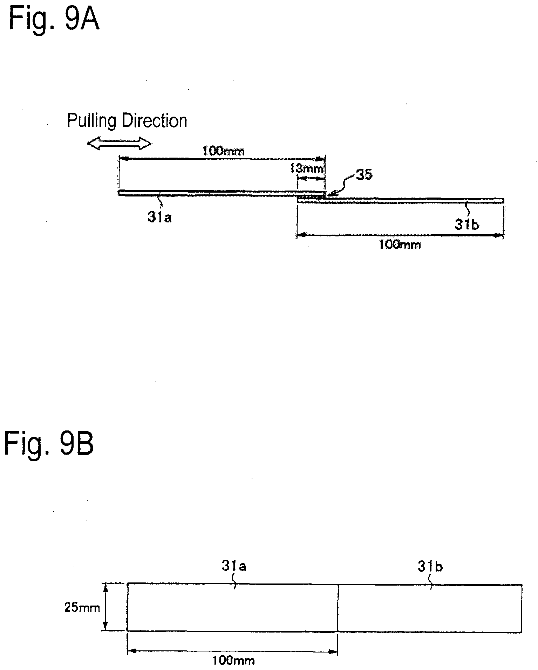

Fig. 9A and Fig. 9B are views schematically illustrating the method for measuring a cohesive failure rate. Fig. 9A is a side view, and Fig. 9B is a plan view. As illustrated in Fig. 9A and Fig. 9B, end parts of two test samples 31a and 31b (25 mm in width) having the same configuration were overlapped and bonded via a thermosetting epoxy resin-based adhesive resin to provide a length of overlap of 13 mm (adhesive area: 25 mm×13 mm). The adhesive resin 35 used here is a thermosetting epoxy resin-based adhesive resin (amount of bisphenol A epoxy resin: from 40 to 50 mass%).
The thickness of the adhesive resin 35 was adjusted to 150 μm by adding a trace amount of glass beads (particle size: 150 μm) to the adhesive resin 35. After overlapping, drying at room temperature for 30 minutes was performed, followed by heating at 170°C for 20 minutes to execute a thermal curing treatment. Thereafter, leaving standing still at room temperature for 24 hours was performed to produce an adhesion test piece.
The produced adhesion test piece was held in a high-temperature humid environment at 50°C and a relative humidity of 95% for 30 days and then pulled at a rate of 50 mm/min by using a tensile tester, and the cohesive failure rate of the adhesive resin in the adhesion portion was evaluated. The cohesive failure rate was calculated based on the following mathematical expression 1. In the mathematical expression 1, specimen a refers to one side after pulling of the adhesion test piece, and specimen b refers to the other side thereof.

[Math. 1]

$$\text{Cohesive failure rate (\%)} = 100 - \left\{ \frac{\text{(interfacial peeling area of specimen a)}}{\text{(adhesive area of specimen a)}} \times 100 + \frac{\text{(interfacial peeling area of specimen b)}}{\text{(adhesive area of specimen b)}} \times 100 \right\}$$

Three test pieces were prepared for each test condition, and the cohesive failure rate was defined as the average value of three test pieces. The evaluation criteria were: defective (C) when the cohesion failure rate was less than 80%, good (A) when 80% or more and less than 90%, and excellent (AA) when 90% or more, and those where the cohesion failure rate is 80% or more were judged as "Pass".
These results are shown together in Table 1.
[Table 1]

Table 1

| | No. | First Layer | | | | | Second Layer | Bonding Amount Between First Layer and Second Layer | Cohesive Failure Rate (%) |
|---|---|---|---|---|---|---|---|---|---|
| | | Element Concentration (at%) | | | | Etching Amount | Silane Coupling Treatment Method | | |
| | | Mg | Si | Cu | Al | (nm) | | | |
| Ex. | 1 | 16 | 31 | 0.07 | 39 | 51 | dipping | 0.023 | A |
| | 2 | 12 | 36 | 0.25 | 39 | 131 | dipping | 0.024 | A |
| | 3 | 23 | 22 | 0.02 | 43 | 5 | dipping | 0.019 | A |
| | 4 | 17 | 21 | 0.02 | 49 | 7 | dipping | 0.021 | A |
| | 5 | 0.85 | 15 | 0.34 | 74 | 203 | dipping | 0.026 | AA |
| | 6 | 0.74 | 21 | 0.15 | 70 | 195 | bar-coating | 0.030 | AA |
| | 7 | 0.31 | 18 | 0.41 | 70 | 320 | dipping | 0.019 | AA |
| | 8 | 0.12 | 29 | 0.13 | 63 | 47 | dipping | 0.034 | AA |
| | 9 | 0.42 | 17 | 0.38 | 70 | 191 | bar-coating | 0.037 | AA |
| | 10 | 1.1 | 53 | 0.30 | 28 | 184 | dipping | 0.052 | AA |
| | 11 | 9.5 | 20 | 0.05 | 62 | 10 | bar-coating | 0.021 | AA |
| | 12 | 1.2 | 23 | 0.3 | 65 | 83 | dipping | 0.028 | AA |
| Com. Ex. | 1 | 1.1 | 9.1 | 0.16 | 77 | 128 | dipping | 0.01 | C |
| | 2 | 1.5 | 9.5 | 0.20 | 71 | 201 | dipping | 0.012 | C |
| | 3 | 0.51 | 18 | 0.66 | 67 | 730 | dipping | 0.016 | C |

As seen in Table 1, in the aluminum alloy materials of Comparative Examples 1 to 3 where the M-O-Si bonding amount is outside the range of the present invention, the cohesive failure rate was less than 80%, and the adhesion durability in a high-temperature humid environment was poor. On the other hand, in the aluminum alloy materials of Examples 1 to 12 where the M-O-Si bonding amount is within the range of the present invention, the cohesive failure rate was 80% or more, and the adhesion durability in a high-temperature humid environment was good. Above all, in the aluminum alloy materials of Examples 5 to 12 where the Mg amount is less than 10 at%, the cohesive failure rate was 90% or more, and the adhesion durability in a high-temperature humid environment was excellent.

In Comparative Example 1 where a silicate treatment is not performed, a sufficient M-O-Si bonding amount could not be obtained, and a predetermined cohesion failure rate could not be obtained.

In Comparative Example 2 where a silicate treatment was performed and then a hydrofluoric acid/sulfuric acid solution treatment was performed, the silicate treatment

**Claims**

1.  An aluminum alloy material, comprising:

   an aluminum alloy substrate;
   a first film formed on at least a part of a surface of the aluminum alloy substrate and comprising an oxide film comprising 0.1 at% or more and less than 30 at% of Mg and 12 at% or more and 80 at% or less of Si, with Cu being restricted to less than 0.6 at%; and a second film formed on at least a part of the first film and having a siloxane bond,
   wherein in a spectrum obtained by injecting parallel polarized light at an incident angle of 75° into a surface on which the first film and the second film have been formed, by use of Fourier transform infrared spectroscopy, when a base line is drawn from 1,026 cm$^{-1}$ to 1,084 cm$^{-1}$, an area of a peak occurring near 1,057 cm$^{-1}$ is 0.019 or more.

2.  The aluminum alloy material according to Claim 1, wherein the aluminum alloy substrate comprises an Al-Mg alloy, an Al-Cu-Mg alloy, an Al-Mg-Si alloy, or an Al-Zn-Mg alloy.

3. The aluminum alloy material according to Claim 1, wherein an adhesive resin layer comprising an adhesive resin has been formed on an outermost surface of a portion where the first film and the second film have been formed.

4. A joined body, using the aluminum alloy material according to Claim 1.

5. A joined body, using the aluminum alloy material according to Claim 2.

6. A joined body, using the aluminum alloy material according to Claim 3.

7. A joined body, wherein the aluminum alloy materials according to Claim 1 have been disposed to face one another across portions having formed therein the first film and the second film and joined via an adhesive resin.

8. A joined body, wherein, to a portion having formed therein the first film and the second film of the aluminum alloy material according to Claim 1 has been joined a resin formed article or another aluminum alloy material having not formed therein the first film and the second film, via an adhesive resin.

9. A joined body, wherein the aluminum alloy material according to Claim 3 and the aluminum alloy material according to Claim 1 have been disposed by arranging a portion having formed therein the adhesive resin layer and a portion having formed therein the first film and the second film to face one another and joined via the adhesive resin layer.

10. A joined body, wherein, to a portion having formed therein the adhesive resin layer of the aluminum alloy material according to Claim 3 has been joined a resin formed article or another aluminum alloy material having not formed therein the first film and the second film.

11. The joined body according to Claim 8, wherein the resin formed article is a fiber-reinforced plastic formed article.

12. The joined body according to Claim 10, wherein the resin formed article is a fiber-reinforced plastic formed article.

13. An automotive part, using the joined body according to any one of Claims 4 to 12.

14. A method for manufacturing an aluminum alloy material, comprising:

a first film forming step of forming a first film comprising an oxide film on at least a part of a surface of an aluminum alloy substrate; and
a second film forming step of forming a second film on at least a part of the first film by a silane coupling treatment, wherein:

the first film forming step comprises a heat treatment stage and after the heat treatment stage, an etching treatment stage and a silicate treatment stage, and the silicate treatment stage is provided after the etching treatment stage or simultaneously with the etching treatment stage;
an etching amount in the etching treatment stage is controlled to less than 700 nm; and
as the silicate treatment stage, a treatment is performed by using a silicate-containing aqueous solution.

15. The method for manufacturing an aluminum alloy material according to Claim 14, wherein in the first film forming step, the silicate treatment stage is provided after the etching treatment stage and as the etching treatment stage, at least one of an acid treatment and an alkali solution treatment is performed.

16. The method for manufacturing an aluminum alloy material according to Claim 14, wherein in the first film forming step, the silicate treatment stage is provided simultaneously with the etching treatment stage, and the silicate-containing aqueous solution is an acidic or alkaline aqueous solution comprising a silicate.

17. The method for manufacturing an aluminum alloy material according to any one of Claims 14 to 16, further comprising a step of forming an adhesive resin layer on an outermost surface of a portion where the first film and the second film have been formed.

18. The method for manufacturing an aluminum alloy material according to any one of Claims 14 to 16, wherein the aluminum alloy substrate comprises an Al-Mg alloy, an Al-Cu-Mg alloy, an Al-Mg-Si alloy, or an Al-Zn-Mg alloy.

## Fig. 1

## Fig. 2

Aluminum Alloy Material 10

Fig. 3

Fig. 4

| Substrate Producing Step | S1 |
| First Film Forming Step | S2 |
| Second Film Forming Step | S3 |
| Adhesive Resin Layer Forming Step | S4 |

Aluminum Alloy Material 11

Fig. 5

Fig. 6A

EP 3 219 828 A1

## Fig. 6B

## Fig. 7

Fig. 8A

Fig. 8B

Fig. 9A

Pulling Direction

100mm

13mm

35

31a

31b

100mm

Fig. 9B

31a

31b

25mm

100mm

**INTERNATIONAL SEARCH REPORT**

| International application No. |
| --- |
| PCT/JP2015/081691 |

| A. CLASSIFICATION OF SUBJECT MATTER |
| --- |
| *C23C28/00*(2006.01)i, *B32B9/00*(2006.01)i, *B32B15/20*(2006.01)i |

According to International Patent Classification (IPC) or to both national classification and IPC

| B. FIELDS SEARCHED |
| --- |

Minimum documentation searched (classification system followed by classification symbols)
C23C28/00, B32B9/00, B32B15/20

Documentation searched other than minimum documentation to the extent that such documents are included in the fields searched
| Jitsuyo Shinan Koho | 1922–1996 | Jitsuyo Shinan Toroku Koho | 1996–2016 |
| --- | --- | --- | --- |
| Kokai Jitsuyo Shinan Koho | 1971–2016 | Toroku Jitsuyo Shinan Koho | 1994–2016 |

Electronic data base consulted during the international search (name of data base and, where practicable, search terms used)

| C. DOCUMENTS CONSIDERED TO BE RELEVANT |
| --- |

| Category* | Citation of document, with indication, where appropriate, of the relevant passages | Relevant to claim No. |
| --- | --- | --- |
| X | JP 2003-342790 A (Mitsubishi Aluminum Co., | 14-15,17-18 |
| Y | Ltd.), | 1-13,16 |
| | 03 December 2003 (03.12.2003), | |
| | paragraphs [0001], [0002], [0016] to [0023] | |
| | (Family: none) | |
| Y | JP 2006-251656 A (Fuji Photo Film Co., Ltd.), | 16 |
| | 21 September 2006 (21.09.2006), | |
| | paragraphs [0033] to [0043] | |
| | (Family: none) | |
| Y | JP 2013-166975 A (Kobe Steel, Ltd.), | 1-13 |
| | 29 August 2013 (29.08.2013), | |
| | paragraphs [0001], [0002], [0018] to [0033] | |
| | (Family: none) | |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 20 January 2016 (20.01.16) | 02 February 2016 (02.02.16) |

| Name and mailing address of the ISA/ | Authorized officer |
| --- | --- |
| Japan Patent Office | |
| 3-4-3,Kasumigaseki,Chiyoda-ku, | |
| Tokyo 100-8915,Japan | Telephone No. |

Form PCT/ISA/210 (second sheet) (January 2015)

**INTERNATIONAL SEARCH REPORT**

International application No.

PCT/JP2015/081691

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2003-147550 A   (Mitsubishi Aluminum Co., Ltd.), 21 May 2003 (21.05.2003), paragraphs [0007] to [0009] (Family: none) | 1-13 |
| Y | JP 2013-159806 A  (Kobe Steel, Ltd.), 19 August 2013 (19.08.2013), entire text & CN 103243244 A        & KR 10-2013-0090371 A | 4-13 |
| Y | WO 2014/007342 A1  (Teijin Ltd.), 09 January 2014 (09.01.2014), entire text & US 2015/0290911 A1 whole document & EP 2871039 A1        & CN 104395057 A & KR 10-2015-0035768 A | 11-12 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6256881 A
- JP 2006200007 A
- JP 2007217750 A
- JP 8144064 A
- JP 7188956 A